# EUROPEAN PATENT APPLICATION

(11) **EP 2 127 713 A2**
(43) Date of publication of application: **02.12.2009**
(21) Application number: 09250731.8
(22) Date of filing: 16.03.2009
(51) Int. Cl.: A63F 13/10

(54) **Game device**

(30) Priority: 21.05.2008 JP 2008132713
(71) Applicant: Kabushiki Kaisha Bandai, Tokyo 111-8081 (JP)
(72) Inventor: Matsuno, Shotaro, Tokyo 111-8081 (JP); Takahashi, Rikiya, Tokyo 111-8081 (JP)
(74) Representative: Nicholls, Michael John

(57) **Abstract**

To provide a game device with which it is possible to enhance the gameplay using light intensity.

A game device 1 displays a character on a display part 10, and also, when the character is not displayed, it is possible to once again display the character which was not being displayed by changing the light intensity input by means of an optical sensor 40. Furthermore, the game device 1 makes it possible, when there is an attack from a character, to avoid the attack from the character by increasing or decreasing the light intensity input by means of the optical sensor 40 a fixed number of times within a prescribed period of time. In addition, the game device 1 makes it possible to change the character which is displayed on the display part 10 in accordance with the light intensity which is input by means of the optical sensor 40.

## Description

The present invention relates to a game device.

Game devices are known in the art in which a character is displayed on a display part such as a liquid crystal display, and the character which is displayed on the display part is captured by receipt of specific operations from the user. Furthermore, game devices have been proposed in which the character which is displayed on the display part is changed on the basis of output detected by an optical sensor. Consequently, the user can adjust the light intensity input to the optical sensor to change the display character (see Patent Document 1).
Patent Document 1: Japanese Unexamined Patent Application Publication 2000-116948

However, conventional game devices are limited to those methods which utilize optical sensors, and there are still improvements which would be desirable in terms of gameplay involving light intensity.

The present invention has been devised in order to resolve these kinds of conventional issues, and it aims to provide a game device which makes it possible to enhance gameplay using light intensity.

In order to achieve the aim described above, the game device according to the present invention for capturing a character displayed on a display part has a light-intensity measuring part which outputs electrical signals in accordance with the light intensity input, said game device being **characterized in that** it is provided with: a display control part for switching from a capture-possible state display in which a character displayed on the display part can be captured, to a capture-impossible state display in which said character cannot be captured; a first light-intensity determining part which determines the light-intensity value input, in accordance with the electrical signals from the light-intensity measuring part, when the display control part switches to a capture-impossible state display; an instruction part for issuing instructions to change the light intensity input by means of the light-intensity measuring part, in accordance with the light-intensity value determined by means of the first light-intensity determining part; a second light-intensity determining part for determining the light-intensity value input, in accordance with the electrical signals from the light-intensity measuring part, following an instruction from the instruction part; and a variation judging part for judging if the light-intensity value determined by means of the second light-intensity determining part has changed by more than a prescribed value from the light-intensity value determined by means of the first light-intensity determining part, and the display control part switches the capture-impossible state display in the display part to the capture-possible state display when the variation judging part judges that there has been a change by more than the prescribed value.

Furthermore, the first light-intensity determining part preferably judges whether or not the light-intensity value, input to the light-intensity measuring part is greater than a specified value when the display control part has switched the character to the capture-impossible state; and the instruction part preferably issues an instruction to increase or decrease the light intensity, input by means of the light-intensity measuring part, when it is judged that the light-intensity value, determined by means of the first light-intensity determining part, is greater than the specified value, and it issues an instruction to make the opposite change to the light intensity input by means of the light-intensity measuring part, to the case that it is judged that the light-intensity value determined by means of the abovementioned first light-intensity determining part is greater than the specified value, when the light-intensity value determined by means of the first light-intensity determining part is not greater than the specified value.

Furthermore, provision is also preferably made for an operating part, for receiving user operations; and a transfer control part, for judging, on the basis of operating content placed in the operating part, whether or not to transfer to a capture-operation receiving state for receiving character capture operations, when an operation has been received from the operating part in the abovementioned capture-possible state.

Furthermore, the display control part preferably switches to the capture-impossible state display in which a character cannot be captured when the transfer control part judges not to transfer to the capture-operation receiving state.

Furthermore, provision is also preferably made for an avoidance judging part, for judging whether or not an attack from a character has been avoided; and a third light-intensity determining part for determining continuously, in accordance with the electrical signals from the light-intensity measuring part, a light intensity value input over a prescribed period of time when a character has attacked; and the avoidance judging part preferably judges that an attack from a character has been avoided if there is an increase or decrease greater than a prescribed value in the light intensity, judged by means of the third light-intensity determining part, which is repeated a fixed number of times within the prescribed period of time.

Furthermore, provision is also preferably made for a storage part, in which two or more characters are stored with corresponding light-intensity values; and a fourth light-intensity determining part, for determining a light-intensity value input, in accordance with the electrical signals from the light-intensity measuring part, when a user is searching for a character; and the display control part preferably displays on the display part the character corresponding to the light-intensity value, determined by means of the fourth light-intensity determining part, from among the two or more characters stored in the storage part.

Furthermore, the display control part preferably switches from the capture-possible state display to the capture-impossible state display by not displaying the character which was displayed on the display part, and it preferably switches the capture-impossible state display on the display part to the capture-possible state display by once again displaying the character which was not being displayed when the variation judging part judges that there has been a change by more than a prescribed value.

According to the game device of the present invention, the light-intensity value, input to the light-intensity measuring part, is determined and an instruction is issued so as to change the light intensity, input by means of the light-intensity measuring part, in accordance with said light intensity value when the display control part has switched the character to capture-impossible state display. Consequently, it is possible to prompt a change in the light intensity in a capture-impossible state, such as when a character is escaping. Furthermore, it is judged if the light-intensity value after the instruction has changed by more than a prescribed amount from the light-intensity value at the time when the capture-impossible state was reached. If there has been a change by more than the prescribed value, the state is switched to the capture-possible state. Consequently, this change in light intensity makes it possible for a character which was escaping, or similar, to once again be captured. In this way, the user can make it, by changing the light intensity, so that a character which could not be captured for a time can once again be captured, and the gameplay involving light intensity can be enhanced for the user.

Furthermore, it is judged whether or not the light-intensity value when the capture-impossible state has been set is greater than a specified value. If it is greater than a specified value, an instruction is issued so as to increase or decrease the measured light intensity. If it is not greater than the specified value, an instruction is issued so as to make the opposite change to the case in which the measured light intensity is greater than the specified value. Consequently, it is necessary for the user to carry out two types of operations, namely operations of increasing or decreasing the light intensity measured by means of the light-intensity measuring part, and the gameplay can be enhanced for the user compared with the case in which the light intensity is uniformly increased or decreased.

Furthermore, it is judged whether or not to transfer to a capture operation receiving state, in which character capture operations are received, by receiving an operation from the operating part during the capture-possible state. Consequently, the user cannot capture a character unless the operating part has carried out an operation to transfer to the capture operation receiving state. In this way, the relative difficulty of the character capture process increases, and the gameplay can be further enhanced for the user.

Furthermore, when the operating part has not carried out an operation to transfer to the capture operation receiving state, there is a switch to the capture-impossible state display, in which the character cannot be captured. Consequently, even if there has been no transfer to the capture operation receiving state by operation of the operating part, transfer to the capture-possible state is still feasible by means of a change in light intensity, and it is possible to once again transfer to the capture operation receiving state by operation of the operating part after the transfer to the capture-possible state. Accordingly, the user can enjoy transfer to the capture operation receiving state, while repeating the capture-impossible state and capture-possible state, and the gameplay can be further enhanced for the user.

Furthermore, when a character has attacked, it is judged that the attack from the character has been avoided if there is an increase or decrease, greater than a prescribed value, in the light intensity and which is repeated a fixed number of times within a prescribed period of time (if the game device is shaken, for example). Therefore, the game can be enjoyed by changing the light intensity, and the gameplay can be further enhanced for the user.

Furthermore, when the user is searching for a character, any one of two or more characters is displayed in accordance with the light-intensity value. Therefore, it is possible to make changes in accordance with the light intensity for the character being displayed, such as a character which likes the dark or a character which likes the light, and the game can be enjoyed by changing the light intensity, thereby further enhancing the gameplay for the user.

Furthermore, there is a switch to the capture-impossible state display if the character is not displayed, and there is a switch to the capture-possible state display if the character, which was not being displayed, is once again displayed. Consequently, the user can judge if there is a capture-possible state or capture-impossible state according to the display or non-display of the character, and the current state can be advised to the user in a manner that is easily understood, even with a display part having a small display region.

The invention will now be described by way of non-limiting example, with reference to the accompanying drawings, in which:
Figure 1 is an external view of the game device according to a mode of embodiment of the present invention, where (a) shows mode 1, (b) shows the front face in mode 2, and (c) shows the back face in mode 2;
Figure 2 is a block diagram showing the internal structure of the game device according to a mode of embodiment of the present invention;
Figure 3 shows the outline of a battle;
Figure 4 is a flowchart showing the basic operation of the game device according to a mode of embodiment;
Figure 5 is a flowchart showing the content of the gausting processing (S6) shown in Figure 4, with the first conditions at the end of gausting being shown;
Figure 6 is a flowchart showing the content of the gausting processing (S6) shown in Figure 4, with the second conditions at the end of gausting being shown;
Figure 7 is a flowchart showing the content of the gausting processing (S6) shown in Figure 4, with the processing content until the capture of the character being shown, and also the processing in long-distance display being shown;
Figure 8 is a flowchart showing the content of the gausting processing (S6) shown in Figure 4, with the processing content until the capture of the character being shown, and also the processing in medium-distance display being shown;
Figure 9 is a flowchart showing content of the gausting processing (S6) shown in Figure 4, with the processing content until the capture of the character being shown, and also the processing in short-distance display being shown;
Figure 10 shows an exemplary display for a chance action, where (a) shows a normal state, and (b) shows the chance action;
Figure 11 shows an example of when the zoom key has been depressed outside of a chance action; and
Figure 12 is a flowchart showing in detail the sensor action processing (S33) shown in Figure 7.

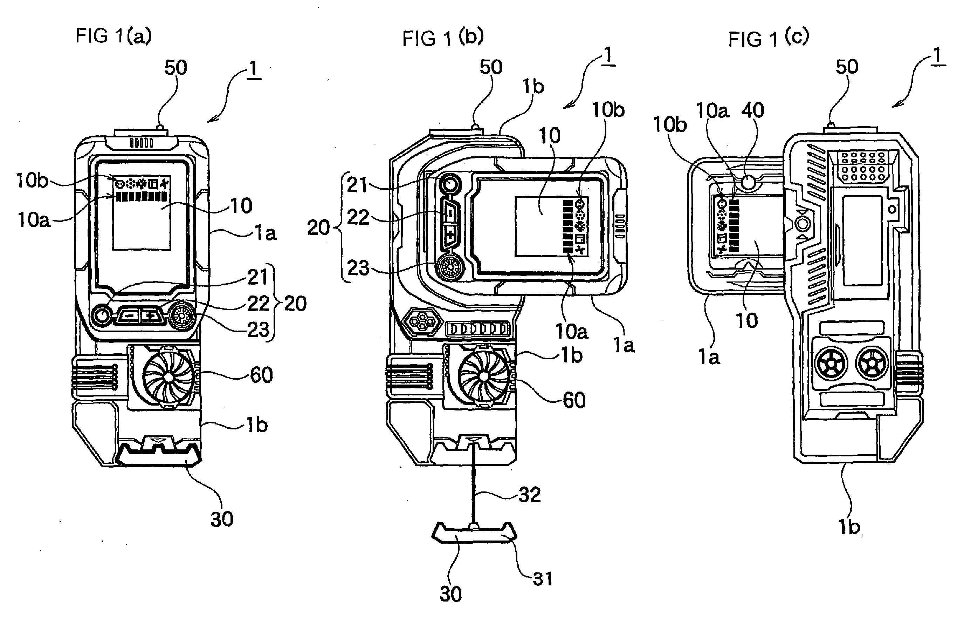

An embodiment of the present invention will be described below with reference to the figures. Figure 1 is an external view of the game device according to a mode of embodiment of the present invention, where (a) shows mode 1, (b) shows the front face in mode 2, and (c) shows the back face in mode 2. The game device 1 shown in Figure 1 is a portable game device for receiving operations from a user and capturing characters, and it comprises a first main body part 1a and a second main body part 1b, the first main body part 1a being rotatable through 90° with respect to the second main body part 1b. The state in which the first main body part 1a is not rotated through 90° with respect to the second main body part 1b shall be referred to as mode 1, the state in which the first main body 1a is rotated through 90° with respect to the second main body part 1b being referred to as mode 2.

As shown in Figure 1(a), the first main body part 1a comprises a display part 10, an operating switch 20 (operating part) and an optical sensor (light-intensity measuring part) 40. The display part 10 displays a character to be captured. Furthermore, the display part 10 is designed to display various images for progression of the game, other than the character, such as a strength gauge 10a and various icons 10b. The operating switch 20 receives operations from the user and is used to carry out various operations for the progression of the game; it consists of a cancel key 21, a zoom key 22, and a "O" key 23. Furthermore, the zoom key 22 consists of a "+" key and a "-" key.

Furthermore, as shown in Figure 1(c), the optical sensor 40 is provided at the rear face of the first main body part 1a, and when the first main body part 1a is rotated through 90° with respect to the second main body part 1b and is in mode 2, this sensor is designed to output electrical signals in accordance with the light intensity input from the outside.

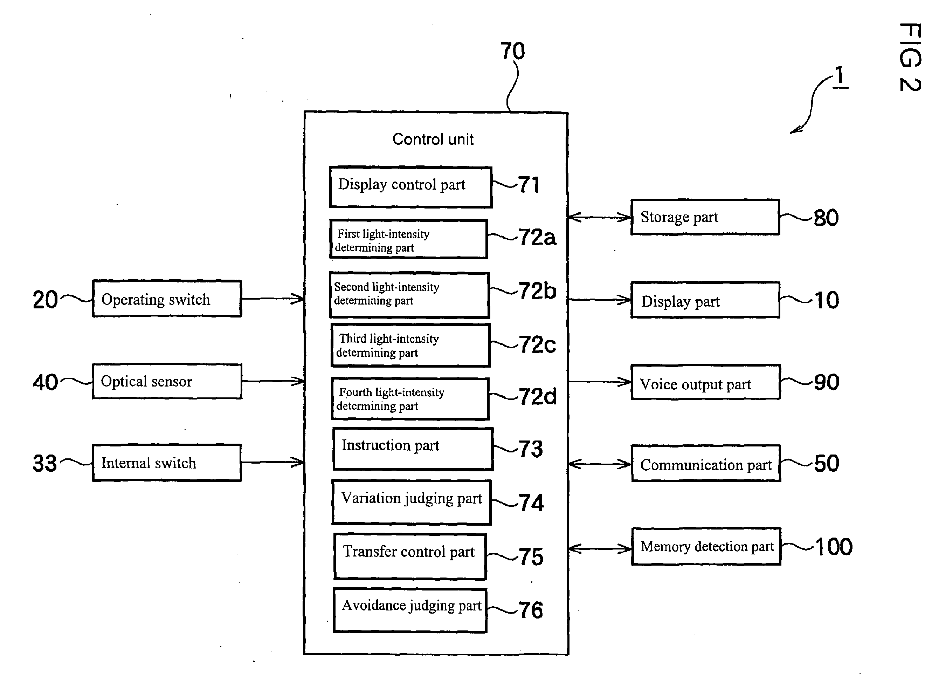

In addition, the second main body part 1b is provided with a power-increase reel (operating part) 30, a communication part 50 and a memory insertion part 60. The power-increase reel 30 is used for receiving operations from the user such as when capturing a character, and it comprises a handle 31 and a cord 32. When the user pulls the handle 31, the power-increase reel 30 can be operated. In this case, the cord 32 is connected to a rotating body provided inside the second main body part 1b, and the rotating body is designed to rotate when the handle 31 is pulled. Furthermore, the rotating body has a protrusion on its rotating outer periphery, and the rotating body is designed so that when it rotates, the protrusion depresses an internal switch 33 (see Figure 2) provided inside the second main body part 1b. The amount of operation of the power-increase reel 30 is measured by the number of times the internal switch 33 is depressed. In addition, the rotating body urges the handle 31 closer to the second main body part 1b, and when the user releases the handle 31, the handle 31 is housed in a specific place in the second main body 1b.

The communication part 50 allows communication with a game device 1 owned by another user, and it allows users to enjoy competition between characters which have been captured by this communication. The memory insertion part 60 is the place where a memory card (not depicted) is inserted, and insertion of a memory card allows new characters to appear, or the like.

Figure 2 is a block diagram showing the internal structure of the game device 1 according to the mode of embodiment of the present invention. As shown in Figure 2, the game device 1 is provided with a control unit 70, a storage part 80, a voice output part 90 and a memory detection part 100, in addition to the features shown in Figure 1, and each component is connected to the control unit 70.

The control unit 70 controls the game device 1 overall, and it reads in various kinds of programs stored in the storage part 80 for progression of the game. Moreover, two or more two characters which are displayed on the display part 10 are stored in the storage part 80, in addition to the various kinds of programs. These characters are stored with corresponding light-intensity values, each input by means of the optical sensor 40. Accordingly, a character corresponding with the light-intensity value input is displayed on the display part 10.

Furthermore, the control unit 70 judges if any of the switches 21 - 23 have been depressed, based on signals from the operating switch 20, and executes control in accordance with the switches 21 - 23 which have been depressed. Furthermore, the control unit 70 manages communication in general at the communication part 50. In addition, the control unit 70 is connected to the power-increase reel 30 via the internal switch 33, and it judges the amount of operation of the power-increase reel 30 according to the number of times the internal switch 33 has been depressed.

In addition, the control part 70 controls the voice content output from the voice output part 90. In addition, the control unit 70 is connected to the memory detection part 100 which is provided inside the memory insertion part 60. When a memory card is inserted into the memory insertion part 60, the memory detection part 100 detects this and notifies the control unit 70.

Furthermore, the control part 70 comprises a display control part 71, first to fourth light-intensity determining parts 72a - 72d, an instruction part 73, a variation judging part 74, a transfer control part 75 and an avoidance judging part 76. The display control part 71 is used to control the display content of the display part 10. The first to fourth light-intensity determining parts 72a - 72d are used to judge the value of the light intensity input to the optical sensor 40 in accordance with electrical signals from the optical sensor 40. The instruction part 73 issues instructions to change the light intensity input by means of the optical sensor 40 (light-intensity measuring part).

The variation judging part 74 is used to judge variation in the light intensity determined by means of the first and second light-intensity determining parts 72a, 72b. The transfer control part 75 is used to judge whether or not to transfer to the capture-operation receiving state in which character capturing operations are received. The avoidance judging part 76 is used to judge whether or not an attack from a character has been avoided.

An outline description will be given next of the operation of the game device 1 according to this mode of embodiment. With the game device 1 according to this mode of embodiment, the user first of all searches for a character to be displayed on the display part 10. In this case, the user rotates the first main body part 1a through 90° so the game device 1 is in mode 2. By means of this, the optical sensor 40 is exposed to the outside, and the fourth light-intensity determining part 72d determines the light intensity value input, in accordance with the electrical signals from the optical sensor 40. Furthermore, the display control part 71 in this case displays the light-intensity value determined by means of the fourth light-intensity determining part 72d on the display part 10. The numerical value which is displayed here is an integer from "-125" to "125", for example.

Then, when the user operates the "O" key 23, the control unit 70 reads in character image information corresponding to the light-intensity value determined by means of the fourth light-intensity determining part 72d from the storage part 80. The display control part 71 displays the character on the display part 10 on the basis of the character image information read in by means of the control unit 70. By means of this, the character battle begins. In this way, when the character is displayed on the display part 10 and the battle begins, the game device 1 is in the capture-possible state in which a character can be captured. Furthermore, the display part 10 at this time informs the user that the capture-possible state is in place by displaying on the display part 10 various kinds of images indicating that the battle is in progress.

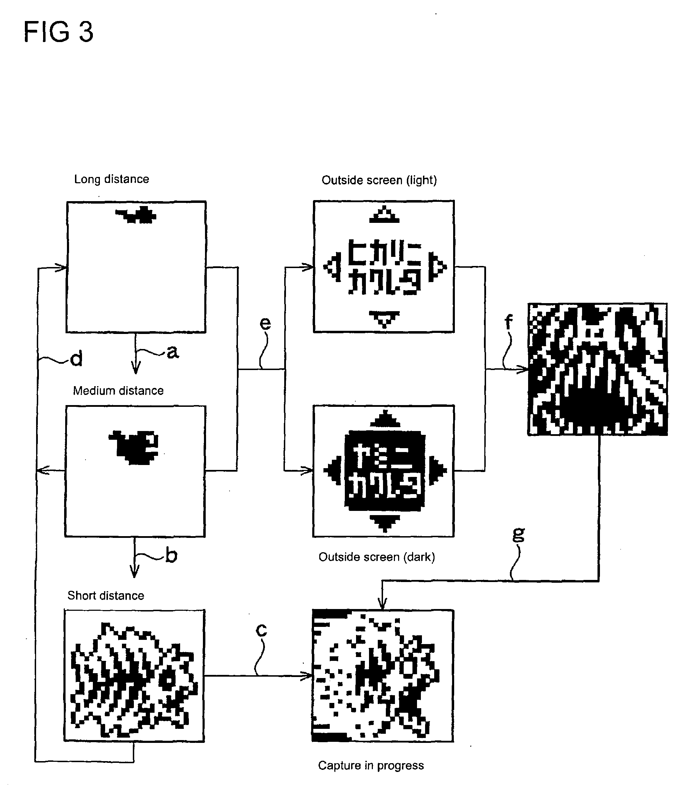

The battle will be described in specific terms. The display control part 71 displays the character in three stages, namely at long distance, medium distance and short distance, during the battle. During this three-stage display, the capture-possible state is in place, and each of "character long-distance display", "character medium-distance display" and "character short-distance display" are one kind of "capture-possible state display", as it is known in the present invention. Moreover, the "capture-possible state display" is not limited to the "character long-distance display" etc., and any display which shows the user that the capture-possible state is in place is of course acceptable. Figure 3 shows a schematic of the battle. When the battle starts, the display control part 71 displays a character in either a long-distance or short-distance state. For example, when the characters are divided up by levels, the display part 71 displays a low-level character at short distance, and a character which is not low level at long distance. Furthermore, a character can move from long distance to short distance, via medium distance, and move from long distance to short distance, bypassing medium distance by operation of the operating switch 20 and the power-increase reel 30 (see arrows a and b). Then, if the character is displayed at short distance, the capture operation receiving state is assumed, in which character capture operations are received. That is to say, the short distance display state can be said to be the capture-possible state and capture operation receiving state. In this capture operation receiving state, the user can capture a character (see arrow c) by carrying out a winder action (i.e. a capture operation) to operate the power-increase reel 30.

Furthermore, when it has not been possible to transfer to the capture operation receiving state, the display control part 71 causes a character to escape to long distance (see arrow d), or does not display the character (see arrow e). This state of non-display is referred to as the capture-impossible state. That is to say, the display referred to as "character non-display" in this mode of embodiment is referred to as "capture-impossible state display" in the present invention. It should be noted that the "capture-impossible state display" is not limited to this "character non-display", and any display which shows the user that the capture-impossible state is in place is of course acceptable. Furthermore, if it has not been possible to transfer to the capture operation receiving state, as in this mode of embodiment, the character is not necessarily not displayed (i.e. set to the capture-impossible state), and the character may be moved to long distance (i.e. set to the capture-possible state), or if it has not been possible to transfer to the capture operation receiving state, the character may by all means be set to non-display. When a character is in non-display especially (i.e. when it is in the capture-impossible state), the user can once again have the character displayed to transfer to the capture-possible state by carrying out a specific operation. This operation will be described in detail.

When a character is in non-display, the first light-intensity determining part 72a determines the light-intensity value input, in accordance with the electrical signals from the optical sensor 40. The first light-intensity determining part 72a then compares the determined value with a specified value. Next, if the light-intensity value determined by means of the first light-intensity determining part 72a is greater than the specified value, the instruction part 73 controls the display control part 71 so that it displays "hidden in the light" to show that the character has hidden in the light.

At this point, the character has hidden in the light, and therefore the user can once again have the character displayed by increasing the light intensity which is input by means of the optical sensor 40. That is to say, the instruction part 73, by displaying "hidden in the light", issues an instruction to increase the light intensity input by means of the optical sensor 40. After this instruction from the instruction part 73, the second light-intensity determining part 72b then determines the light-intensity value input by means of the optical sensor 40.

Next, the variation judging part 74 judges if the light-intensity value determined by means of the second light-intensity determining part 72b has increased by more than a prescribed value from the light-intensity value determined by means of the first light-intensity determining part 72a. Then, if it is judged by the variation judging part 74 that there has been an increase by more than a prescribed value, the display control part 71 causes the display part 10 to once again display the character which was not being displayed (see arrow f). When the character is once again displayed, it is in the capture-possible state, and therefore the display at this time is the "capture-possible state display". Furthermore, at this time, the game device 1 is in the capture operation receiving state, and a winder action to operate the power-increase reel 30 enables a character to be captured (see arrow g). That is to say, when a character is once again displayed, the capture-possible state and the capture operation receiving state are both in place.

On the other hand, if the light-intensity value determined by the first light-intensity determining part 72a is not greater than the specified value, the instruction part 73 controls the display control part 71 to display "hidden in the dark" to show that the character has hidden in the dark.

At this point, the character has hidden in the dark, and therefore the user can once again have the character displayed by decreasing the light intensity which is input by means of the optical sensor 40. That is to say, the instruction part 73, by displaying "hidden in the dark", issues an instruction to make the opposite change in the light intensity input by means of the optical sensor 40 to the case in which it is judged that the specified value has been exceeded. After this instruction from the instruction part 73, the second light-intensity determining part 72b then determines the light-intensity value input by means of the optical sensor 40.

Next, the variation judging part 74 judges if the light-intensity value determined by means of the second light-intensity determining part 72b has decreased by more than a prescribed value from the light-intensity value determined by means of the first light-intensity determining part 72a. Then, if the variation judging part 74 judges that there has been a decrease by more than the prescribed value, the display control part 71 once again displays the character which was not being displayed on the display part 10 (see arrow f). When the character is once again displayed, it is in the capture-possible state, and therefore the display at this time is the "capture-possible state display". Furthermore, at this time, the game device 1 is in the capture operation receiving state, and a winder action to operate the power-increase reel 30 enables a character to be captured (see arrow g). That is to say, when a character is once again displayed, the capture-possible state and the capture operation receiving state are both in place.

The operation of the game device 1 according to this mode of embodiment will be described next with reference to flowcharts and display images. It should be noted that the flowcharts shown below are no more than an example, and the content of the processing shown in the flowcharts may be appropriately modified and new processing may be added.

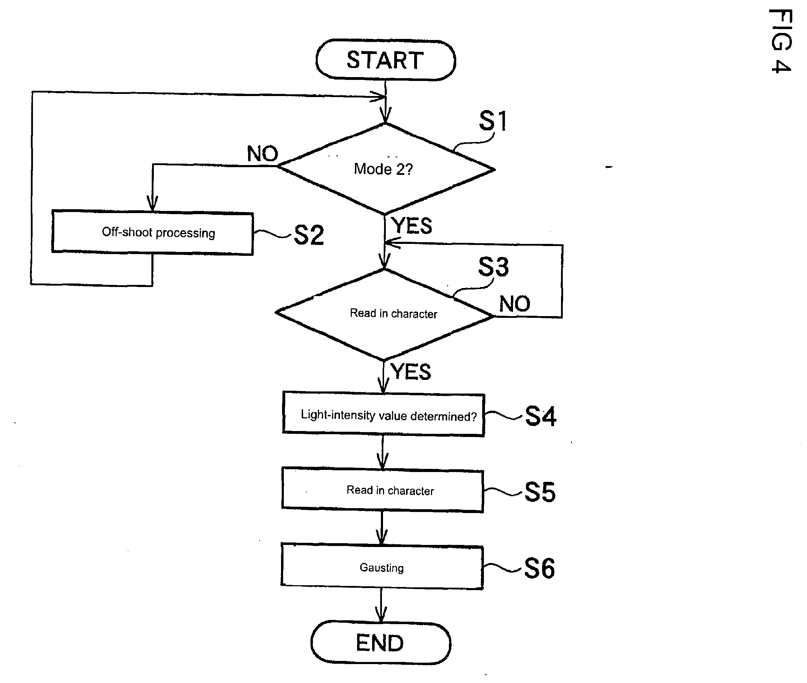

Figure 4 is a flowchart showing the basic operation of the game device 1 according to this mode of embodiment. As shown in Figure 4, the control unit 70 first of all judges whether or not the game device 1 is in mode 2 (S1). If it is judged that the device is not in mode 2 (S1: NO), the control unit 70 can execute off-shoot processing (S2). In this instance, off-shoot processing constitutes processing for communicating with another game device 1 or for displaying the time, or such like. After off-shoot processing has been executed, the processing moves to step S1.

On the other hand, if it is judged that the game device 1 is in mode 2 (S1: YES), the control unit 70 judges whether or not the "O" key 23 has been operated (S3). If it is judged that the "O" key 23 has not been operated (S3: NO), this processing is repeated until it is judged that the key has been operated. If it is judged that the "O" key 23 has been operated (S3: YES), the fourth light-intensity determining part 72d determines the light-intensity value in accordance with the electrical signals from the optical sensor 40 (S4). The control unit 70 then reads in the character which corresponds to the light-intensity value determined in step S4 from the storage part 80 (S5). After this, the battle with the character, or "gaust" starts (S6). This battle is known as "gausting", and the game device 1 is first of all set to the capture-possible state. After the battle has finished, the processing shown in Figure 4 is then finished.

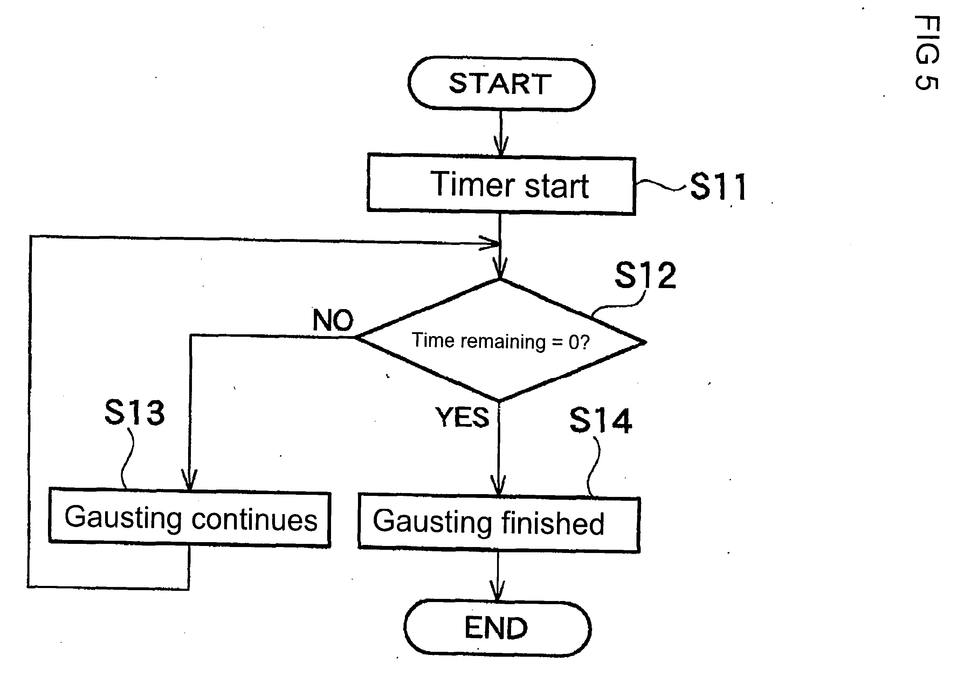

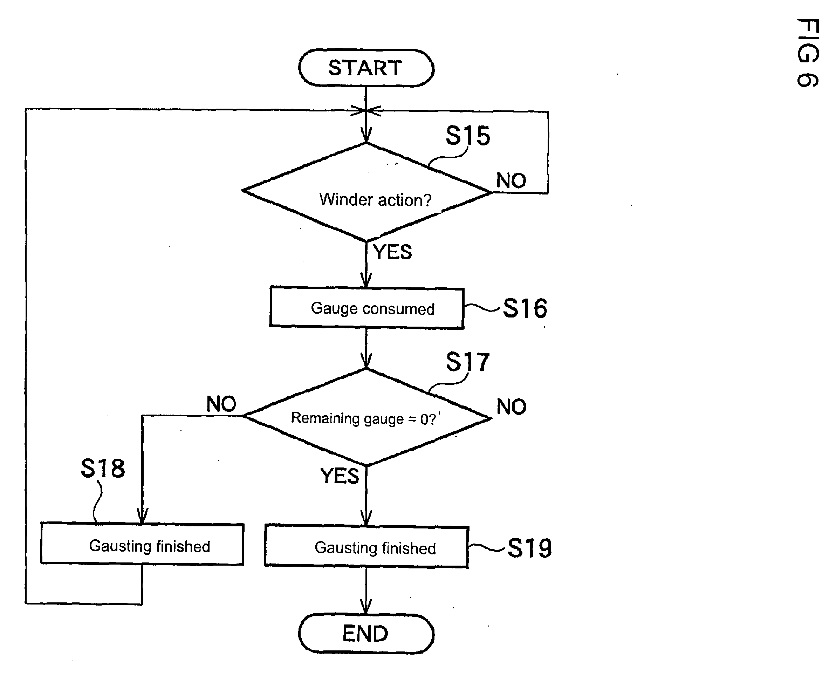

Figures 5 and 6 are flowcharts showing the content of the gausting processing (S6) shown in Figure 4, and they show the conditions at the end of gausting. Gausting is brought to an end by time and strength gauges being used up. As shown in Figure 5, when the gausting starts, the control unit 70 starts a timer (S11). After this, the control unit 70 judges whether or not the time remaining for the gausting has reached "0" (S12). If it is judged that the time remaining has not reached "0" (S12: NO), the control unit 70 allows the gausting to continue (S13), and the processing moves to step S12. Furthermore, if it is judged that the time remaining has reached "0" (S12: YES), the control unit 70 ends the gausting (S14) and the processing is finished.

Furthermore, the control unit 70 executes the processing shown in Figure 6 in parallel with the processing shown in Figure 5. As shown in Figure 6, when the gausting starts, the control unit 70 judges whether or not there has been a winder action, based on signals from the internal switch 33 (S15). If it is judged that there has not been a winder action (S15: NO), this processing is repeated until it is judged that there has been a winder action.

Furthermore, when it is judged that there has been a winder action (S15: YES), the control unit 70 diminishes the strength gauge 10a in accordance with the signals from the internal switch 33 (S16). After this, the control unit 70 judges whether or not the strength gauge 10a has "0" remaining (S17). If it is judged that the strength gauge 10a does not have "0" remaining (S17: NO), the control unit 70 allows the gausting to continue (S18), and the processing moves to step S15. Furthermore, if it is judged that the strength gauge has "0" remaining (S17: YES), the control unit 70 ends the gausting (S19) and the processing is finished.

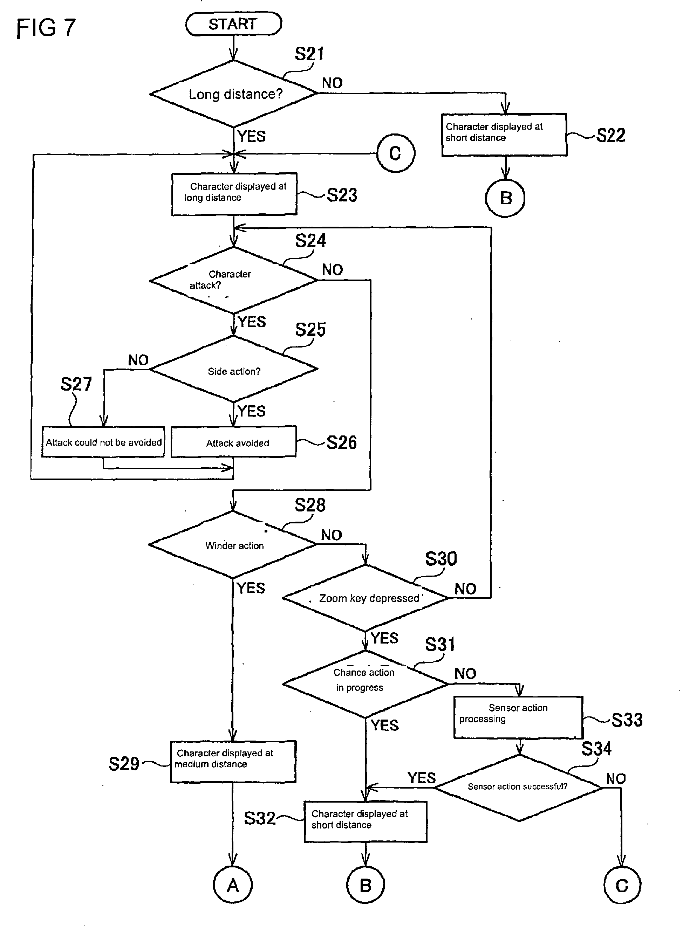

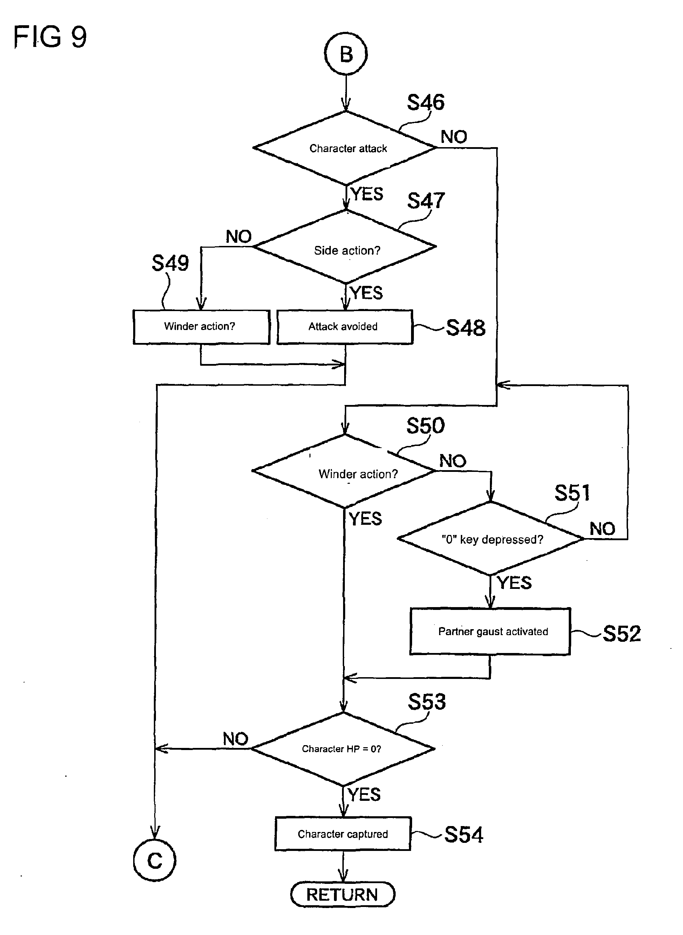

Figures 7 to 9 are flowcharts showing the content of the gausting processing (S6) shown in Figure 4, and it shows the processing until a character is captured. As shown in Figure 7, the control unit 70 first of all judges whether or not the character is displayed at long-distance, using the character's level etc. (S21). If it is judged not to be displayed at long distance (S21: NO), the display control part 71 displays the character at short distance (S22). The state at this time is the "capture-possible state and capture operation receiving state", and the "character short-distance display" is the "capture-possible state display". After this, the processing moves to step S46 in Figure 9.

If it is judged that the character is displayed at long distance (S21: YES), the display control part 71 displays the character at long distance (S23). The state at this time is the "capture-possible state", and the "character long-distance display" is the "capture-possible state display". Next, the control unit 70 judges whether or not a character has attacked (S24). If it is judged that a character has attacked (S24: YES), the avoidance judging part 76 judges whether or not there has been a side action (S25). In this instance, a side action refers to an operation in which there is an increase or decrease greater than a prescribed value in the light intensity which is repeated a fixed number of times within a prescribed period of time.

A detailed description will be given of the processing for judging whether there has been a side action. When there has been an attack from a character, the third light-intensity determining part 72c first of all determines continuously over a prescribed period of time the light intensity value input, in accordance with the electrical signals from the optical sensor 40. The avoidance judging part 76 then receives the continuous information on the light-intensity value from the third light-intensity determining part 72c, and, based on the information, judges whether or not there has been an increase or decrease greater than a prescribed value in the light intensity which is repeated a fixed number of times within the prescribed period of time. Specifically, the user can repeat the increase or decrease greater than the prescribed value in the light intensity a fixed number of times by shaking the game device 1.

Then, if it is judged that there has been a side action (S25: YES), the avoidance judging part 76 judges that the attack has been avoided (S26), and the processing moves to step S23. On the other hand, if it is judged that there has not been a side action (S25: NO), the avoidance judging part 76 judges that the attack could not be avoided (S27), and the processing moves to step S23. It should be noted that if an attack could not be avoided, the strength gauge 10a may be diminished, or a strength value provided separately from the strength gauge 10a may be diminished.

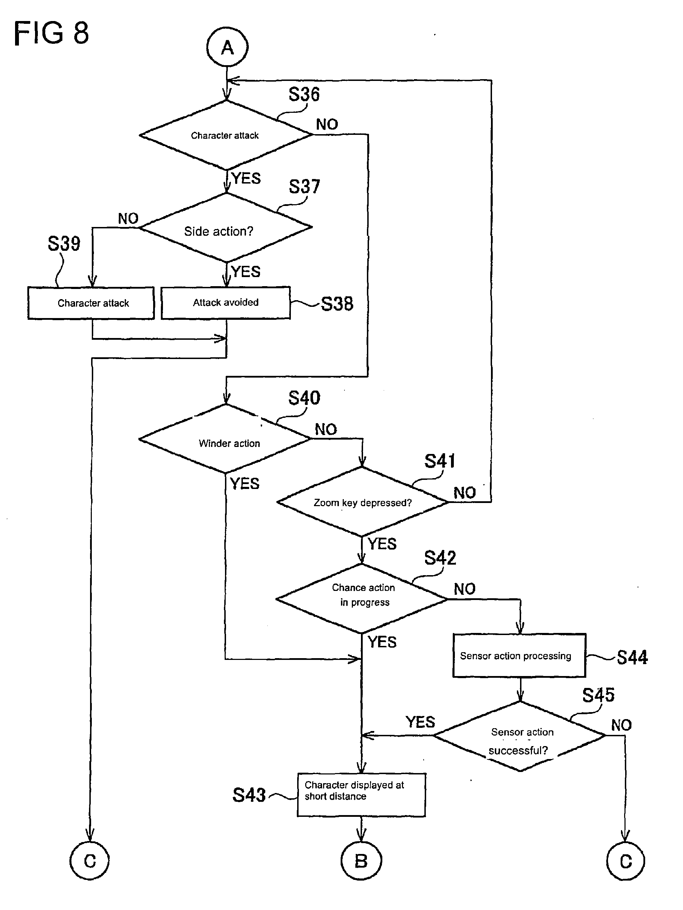

Furthermore, in step S24, if it is judged that a character has not attacked (S24: NO), the control unit 70 judges whether or not there has been a winder action (S28). If it is judged that there has been a winder action (S28: YES), the display control part 71 displays the character at medium distance (S29), as shown in Figure 3. The state at this time is the "capture-possible state", and the "character medium-distance display" is the "capture-possible state display". After this, the processing moves to step S36 in Figure 8.

If it is judged that there has not been a winder action (S28: NO), the control unit 70 judges whether or not the zoom key 22 has been depressed (S30). If it is judged that the zoom key 22 has not been depressed (S30: NO), the processing moves to step S24. On the other hand, if it is judged that the zoom key 22 has been depressed (S30: YES), the control unit 70 judges whether or not a chance action is in progress (S31).

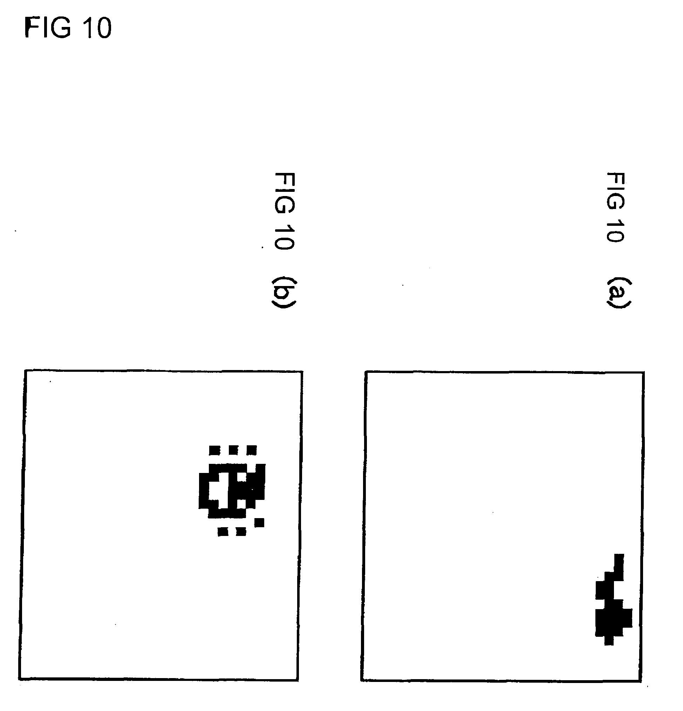

Figure 10 shows an exemplary chance action display, where (a) shows the normal state, and (b) shows the chance action. As shown in Figure 10(a), the character normally carries out an operation in which it moves to the left and right in the display part 10. If a chance action then takes place, the character turns to face the front, and stops for approximately 1 second, as shown in Figure 10(b). The control unit 70 judges whether or not this kind of state has occurred in step S31.

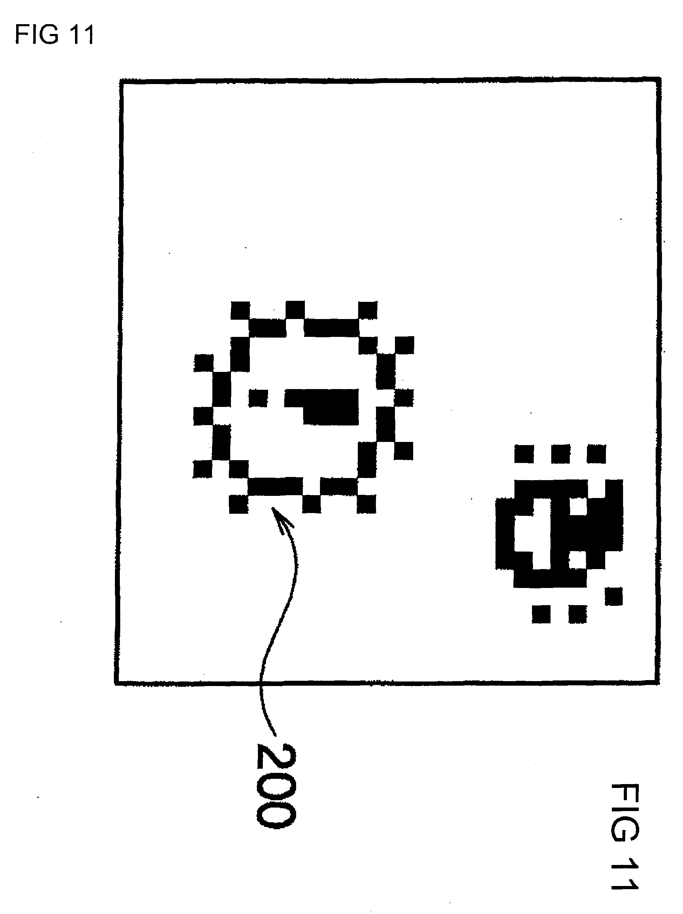

Then, if it is judged that a chance action is in progress (S31: YES), the character moves closer to short distance, and the display part 10 displays the character at short distance (S32). That is to say, the "capture-possible state and capture operation receiving state" are in place, and "character short-distance display" is displayed as the "capture-possible state display". The processing then moves to step S46 in Figure 9. On the other hand, if it is judged that a chance action is not in progress (S31: NO), the display control part 71 displays the image shown in Figure 11.

Figure 11 shows an exemplary display when the zoom key 22 has been depressed outside of a chance action. As shown in Figure 11, if no chance action was in progress when the zoom key 22 was depressed, the display control part 71 displays an exclamation mark 200. The user is then notified that the zoom key 22 has been depressed outside of a chance action. After this, the control unit 70 executes sensor action processing (S33).

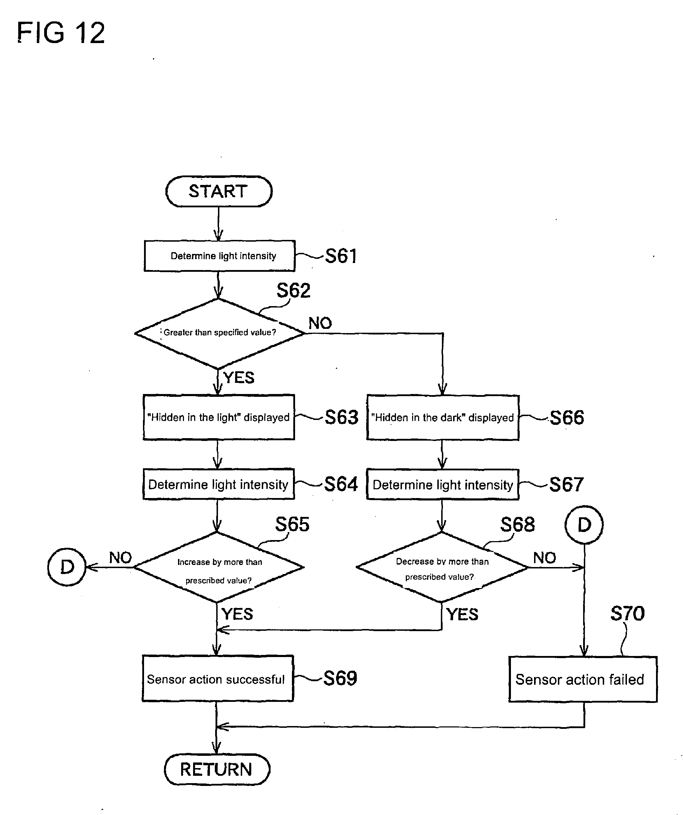

Figure 12 is a flowchart showing in detail the sensor action processing (S33) shown in Figure 7. As shown in Figure 12, in the sensor action processing, the first light-intensity determining part 72a first of all determines the light-intensity value in accordance with the electrical signals from the optical sensor 40 (S61). After this, the first light-intensity determining part 72a judges whether or not the light-intensity value determined in step S61 is greater than a specified value (S62).

If it is judged that the light-intensity value is greater than the specified value (S62: YES), the display control part 71 displays "hidden in the light" on the display part 10, in accordance with the instructions from the instruction part 73, and the character is set to non-display (S63). That is to say, the "capture-impossible state" is in place, and "character non-display" is displayed as the "capture-impossible state display". After this, the second light-intensity determining part 72b determines the light-intensity value in accordance with the electrical signals from the optical sensor 40 (S64). The variation judging part 74 then judges whether or not the light-intensity value in step S64 has increased by more than a prescribed amount from the light-intensity value in step S61 (S65).

If it is judged that there has been an increase by more than the prescribed value (S65: YES), the control unit 70 judges that the sensor action has been successful (S69), and the processing moves to step S34 in Figure 7. Furthermore, if it is judged that there has not been an increase by more than the prescribed value (S65: NO), the control unit 70 judges that the sensor action has failed (S70), and the processing moves to step S34 in Figure 7.

In addition, if it is judged that the light-intensity value in step S61 is not greater than a specified value (S62: NO), the display control part 71 displays "hidden in the dark" on the display part 10, in accordance with the instructions from the instruction part 73, and the character is set to non-display (S66). That is to say, the "capture-impossible state" is in place, and "character non-display" is displayed as the "capture-impossible state display". After this, the second light-intensity determining part 72b determines the light-intensity value in accordance with the electrical signals from the optical sensor 40 (S67). The variation judging part 74 then judges whether or not the light-intensity value in step S67 has decreased by more than a prescribed amount from the light-intensity value in step S61 (S68).

If it is judged that there has been a decrease by more than the prescribed value (S68: YES), the control unit 70 judges that the sensor action has been successful (S69), and the processing moves to step S34 in Figure 7. Furthermore, if it is judged that there has not been a decrease by more than the prescribed value (S68: NO), the control unit 70 judges that the sensor action has failed (S70), and the processing moves to step S34 in Figure 7.

Reference is once again made to Figure 7. After the sensor action processing has finished, the control unit 70 judges whether or not the sensor action processing has been successful (S34). If it is judged that the sensor action processing has been successful (S34: YES), the display part 10 displays the character at short distance (S32). That is to say, the "capture-possible state and capture operation receiving state" are in place, and "character short-distance display" is displayed as the "capture-possible state display. The processing then moves to step S46 in Figure 9. On the other hand, if it is judged that the sensor action processing has not been successful (S34: NO), the processing moves to step S23. It should be noted that if the sensor action has failed, the character may escape so that the gausting is finished, without the processing moving to step S23.

Reference will be made next to Figure 8. If the character is displayed at medium distance (the state at this time is, as described above, the "capture-possible state", and "character medium-distance display" is displayed as the "capture-possible state display"), the control unit 70 judges whether or not the character has attacked (S36). If it is judged that the character has attacked (S36: YES), the avoidance judging part 76 judges whether or not a side action has taken place (S37).

Then, if it is judged that a side action has taken place (S37: YES), the avoidance judging part 76 judges that the attack has been avoided (S38), and the processing moves to step S23 in Figure 7. On the other hand, if it is judged that a side action has not taken place (S37: NO), the avoidance judging part 76 judges that the attack has not been avoided (S39), and the processing moves to step S23 in Figure 7. It should be noted that if an attack could not be avoided, the strength gauge 10a may be diminished, or a strength value provided separately from the strength gauge 10a may be diminshed.

Furthermore, in step S36, if it is judged that a character has not attacked (S36: NO), the control unit 70 judges whether or not there has been a winder action (S40). If it is judged that there has been a winder action (S40: YES), the processing moves to step S43.

If it is judged that a winder action has not taken place (S40: NO), the control unit 70 judges whether or not the zoom key 22 has been depressed (S41). If it is judged that the zoom key 22 has not been depressed (S41: NO), the processing moves to step S36. On the other hand, if it is judged that the zoom key 22 has been depressed (S41: YES), the control unit 70 judges whether or not a chance action is in progress (S42).

If it is judged that a chance action is in progress (S42: YES), the character moves closer to short distance, and the display part 10 displays the character at short distance (S43). That is to say, the "capture-possible state and capture operation receiving state" are in place, and "character short-distance display" is displayed as the "capture-possible state display". The processing then moves to step S46 in Figure 9. On the other hand, if it is judged that a chance action is not in progress (S42: NO), the display control part 71 displays the image shown in Figure 11, after which the sensor action processing illustrated in Figure 12 is executed.

After the sensor action processing has finished, the control unit 70 then judges whether or not the sensor action processing has been successful (S45). If it is judged that the sensor action processing has been successful (S45: YES), the display part 10 displays the character at short distance (S43). That is to say, the "capture-possible state and capture operation receiving state" are in place, and "character short-distance display" is displayed as the "capture-possible state display". The processing then moves to step S46 in Figure 9. On the other hand, if it is judged that the sensor action processing has not been successful (S45: NO), the processing moves to step S23 in Figure 7, and the character is displayed at long distance. It should be noted that if the sensor action has failed in this mode of embodiment, the character is displayed at long distance, but this is not necessarily the case, and the battle with the character may end without the character being displayed once again.

Reference will next be made to Figure 9. If the character is displayed at short distance (as described above, the state at this time is "capture-possible state and capture operation receiving state", and "character short-distance display" is displayed as the "capture-possible state display"), the control unit 70 judges whether or not a character has attacked (S46). If it is judged that the character has attacked (S46: YES), the avoidance judging part 76 judges whether or not there has been a side action (S47).

Then, if it is judged that there has been a side action (S47: YES), the avoidance judging part 76 judges that the attack has been avoided (S48), and the processing moves to step S23 in Figure 7. On the other hand, if it is judged that there has not been a side action (S47: NO), the avoidance judging part 76 judges that the attack could not be avoided (S49), and the processing moves to step S23 in Figure 7. It should be noted that if an attack could not be avoided, the strength gauge 10a may be diminished, or a strength value provided separately from the strength gauge 10a may be diminished.

Furthermore, in step S46, if it is judged that a character has not attacked (S46: NO), the control unit 70 judges whether or not there has been a winder action (S50). If it is judged that there has been a winder action (S50: YES), the processing moves to step S53.

On the other hand, if it is judged that a winder action has not taken place (S50: NO), the control unit 70 judges whether or not the "O" key 23 has been depressed (S51). If it is judged that the "O" key 23 has not been depressed (S51: NO), the processing moves to step S50. If it is judged that the "O" key 23 has been depressed (S51: YES), the control unit 70 activates a partner gaust (S52). In this game device 1, there is a character known as a "partner gaust" which helps in the battle with the character to be captured. When the user depresses the "O" key 23 at short distance, it is possible to receive assistance from the partner gaust. After the activation, the processing then moves to step S53.

In step S53, the control unit 70 judges whether or not the HP, which shows the strength of the character, has reached "0" (S53). If it is judged that the HP has not reached "0" (S53: NO), the processing moves to step S23 in Figure 7. On the other hand, if it is judged that the HP has reached "0" (S53: YES), the control unit 70 captures the character (S54). The processing shown in Figures 7 to 9 is then finished.

In this way, with the game device 1 according to this mode of embodiment, when the display control part 71 switches to the character capture-impossible state display, the light-intensity value input by means of the optical sensor 40 is determined, and an instruction is issued so as to change the light intensity input by means of the optical sensor 40, in accordance with that light-intensity value. Consequently, when a capture-impossible state is in place, such as when a character is escaping, it is possible to prompt a change in the light intensity. Furthermore, it is judged if the light-intensity value after the instruction has changed by more than a prescribed value from the light-intensity value during the capture-impossible state, and if there has been a change by more than the prescribed value, the state is switched to the capture-possible state. Consequently, the character which was escaping, or similar, can once again be captured by changing the light intensity. In this way, the user can once again have the character displayed by changing the light intensity, and the gameplay can be enhanced using light intensity.

Furthermore, it is judged whether or not the light-intensity value during the capture-impossible state is greater than a specified value, and if it is greater than the specified value, an instruction is issued so as to increase or decrease the measured light intensity, while if it is not greater than the specified value, an instruction is issued so as to make the opposite change to the case in which the measured light intensity is greater than the specified value. Consequently, in accordance with the light intensity during a switch to the capture-impossible state, it is necessary for the user to carry out two types of operations, namely operations of increasing or decreasing the light intensity measured by means of the optical sensor 40, and the gameplay can be enhanced compared with the case in which the light intensity is uniformly increased or decreased.

Furthermore, it is judged whether or not to transfer to the capture operation receiving state in which character capture operations are received, by receiving an operation during the capture-possible state (especially during long-distance and medium-distance display). Consequently, the user cannot capture a character unless the operating switch 20 or power-increase reel 30 has been operated to transfer to the capture operation receiving state. In this way, the relative difficulty of the character capture process increases, and the gameplay can be further enhanced.

Furthermore, when there has not been a transfer to the capture operation receiving state, there is a switch to the capture-impossible state display, in which the character cannot be captured. Consequently, even if there has been no transfer to the capture operation receiving state by operation of the operating switch 20 or power-increase reel 30, transfer to the capture-possible state is still feasible by means of a change in light intensity, and it is possible to once again transfer to the capture operation receiving state by operation of the operating switch 20 or power-increase reel 30 after the transfer to the capture-possible state. Accordingly, the user can enjoy transfer to the capture operation receiving state while repeating the capture-impossible state and capture-possible state, and the gameplay can be further enhanced.

Furthermore, when a character has attacked, it is judged that the attack from the character has been avoided if there is an increase or decrease greater than a prescribed value in the light intensity which is repeated a fixed number of times within a prescribed period of time (if the game device 1 is shaken, for example), and therefore the game can be enjoyed by changing the light intensity, and the gameplay can be further enhanced.

Furthermore, when the user is searching for a character, any one of two or more characters is displayed in accordance with the light-intensity value, and therefore it is possible to make changes in accordance with the light intensity for the character being displayed, such as a character which likes the dark or a character which likes the light, and the game can be enjoyed by changing the light intensity, thereby further enhancing the gameplay.

Furthermore, there is a switch to the capture-impossible state display if the character is not displayed, and there is a switch to the capture-possible state display if the character which was not being displayed is once again displayed. Consequently, the user can judge if there is a capture-possible state or capture-impossible state according to the display or non-display of the character, and the current state can be advised to the user in a manner that is easily understood, even with a display part 10 having a small display region.

A description of the game device according to the present invention has been given above on the basis of one mode of embodiment, but the present invention is not limited by this, and various modifications may be added without departing from the essence of the present invention.

For example, a description has been given in the mode of embodiment described above of an example in which, when the light intensity determined by means of the first light-intensity determining part 72a is greater than a specified value, the instruction part 73 issues an instruction to increase the light intensity input by means of the optical sensor 40, but this is not limiting, and an instruction may be issued to decrease the light intensity input by means of the optical sensor 40. Likewise, a description has been given above of an example in which, when the light intensity determined by means of the first light-intensity determining part 72a is not greater than a specified value, the instruction part 73 issues an instruction to decrease the light intensity input by means of the optical sensor 40, but this is not limiting, and an instruction may be issued to increase the light intensity input by means of the optical sensor 40.

Furthermore, the instruction part 73 controls the display control part 71 to instruct a change in light intensity on the display part 10, but this is not limiting, and the instruction to change the light intensity may be issued by other means, such as by voice or vibration. In addition, the character in this mode of embodiment is displayed at short distance, medium distance and long distance, but this is not limiting, and it may be displayed at a uniform distance.

### [Key to Symbols]

- 1: game device
- 1a: first main body part
- 1b: second main body part
- 10: display part
- 20: operating switch
- 21: cancel key
- 22: zoom key
- 23: "O" key
- 30: power-increase reel
- 31: handle
- 32: cord
- 33: internal switch
- 40: optical sensor (light-intensity measuring part)
- 50: communication part
- 60: memory insertion part
- 70: control unit
- 71: display control part
- 72a: first light-intensity determining part
- 72b: second light-intensity determining part
- 72c: third light-intensity determining part
- 72d: fourth light-intensity determining part
- 73: instruction part
- 74: variation judging part
- 75: transfer control part
- 76: avoidance judging part
- 80: storage part
- 90: voice output part
- 100: memory detection part
- 200: exclamation mark

## Claims

1. Game device for capturing a character displayed on a display part, having a light-intensity measuring part which outputs electrical signals in accordance with the light intensity input;
said game device being **characterized in that** it is provided with:
a display control part for switching from a capture-possible state display, in which a character displayed on the abovementioned display part can be captured, to a capture-impossible state display, in which said character cannot be captured;
a first light-intensity determining part which determines the light-intensity value input, in accordance with the electrical signals from the abovementioned light-intensity measuring part, when the abovementioned display control part switches to a capture-impossible state display;
an instruction part for issuing instructions to change the light intensity input by means of the abovementioned light-intensity measuring part, in accordance with the light-intensity value determined by means of the abovementioned first light-intensity determining part;
a second light-intensity determining part for determining the light-intensity value input, in accordance with the electrical signals from the abovementioned light-intensity measuring part, following an instruction from the abovementioned instruction part; and
a variation judging part for judging if the light-intensity value determined by means of the abovementioned second light-intensity determining part has changed by more than a prescribed value from the light-intensity value determined by means of the abovementioned first light-intensity determining part, and
the abovementioned display control part switches the capture-impossible state display in the abovementioned display part to the capture-possible state display when the abovementioned variation judging part judges that there has been a change by more than the prescribed value.

2. Game device according to Claim 1, **characterized in that:**
the abovementioned first light-intensity determining part judges whether or not the light-intensity value, input to the abovementioned light-intensity measuring part, is greater than a specified value when the abovementioned display control part has switched to the capture-impossible state; and
the abovementioned instruction part issues an instruction to increase or decrease the light intensity, input by means of the abovementioned light-intensity measuring part, when it is judged that the light-intensity value determined by means of the abovementioned first light-intensity determining part is greater than the specified value; and it issues an instruction to make the opposite change to the light intensity, input by means of the abovementioned light-intensity measuring part, to the case that it is judged that the light-intensity value determined by means of the abovementioned first light-intensity determining part is greater than the specified value, when the light-intensity value determined by means of the abovementioned first light-intensity determining part is not greater than the specified value.

3. Game device according to Claim 1 or 2, **characterized in that** it is further provided with:
an operating part, for receiving user operations; and
a transfer control part, for judging, on the basis of operating content placed in the abovementioned operating part, whether or not to transfer to a capture-operation receiving state, for receiving character capture operations, when an operation has been received from the abovementioned operating part in the abovementioned capture-possible state.

4. Game device according to Claim 3, **characterized in that** the abovementioned display control part switches to the capture-impossible state display, in which a character cannot be captured, when the abovementioned transfer control part judges not to transfer to the capture-operation receiving state.

5. Game device according to any one of Claims 1 to 4, **characterized in that** it is further provided with:
an avoidance judging part, for judging whether or not an attack from a character has been avoided; and
a third light-intensity determining part, for determining continuously, in accordance with the electrical signals from the abovementioned light-intensity measuring part, a light intensity value input over a prescribed period of time when a character has attacked; and
the abovementioned avoidance judging part judges that an attack from a character has been avoided if there is an increase or decrease greater than a prescribed value in the light intensity, judged by means of the abovementioned third light-intensity determining part, which is repeated a fixed number of times within the prescribed period of time.

6. Game device according to any one of Claims 1 to 5, **characterized in that** it is further provided with:
a storage part, in which two or more characters are stored with corresponding light-intensity values; and
a fourth light-intensity determining part, for determining a light-intensity value input, in accordance with the electrical signals from the abovementioned light-intensity measuring part, when a user is searching for a character; and
the abovementioned display control part displays on the abovementioned display part the character corresponding to the light-intensity value, determined by means of the abovementioned fourth light-intensity determining part, from among the two or more characters stored in the abovementioned storage part.

7. Game device according to any one of Claims 1 to 6, **characterized in that** the abovementioned display control part switches from the capture-possible state display to the capture-impossible state display by not displaying the character which was displayed on the abovementioned display part, and it switches the capture-impossible state display on the abovementioned display part to the capture-possible state display by once again displaying the character which was not being displayed when the abovementioned variation judging part judges that there has been a change by more than a prescribed value.
